(19) Europäisches Patentamt
European Patent Office
Office européen des brevets

(11) **EP 0 448 060 B1**

## (12) EUROPEAN PATENT SPECIFICATION

(45) Date of publication and mention
of the grant of the patent:
**12.06.1996   Bulletin 1996/24**

(51) Int Cl.⁶: **G05D 1/02**

(21) Application number: **91104267.9**

(22) Date of filing: **19.03.1991**

(54) **Automatic travelling apparatus**

Gerät zum automatischen Fahren

Appareil mobile automatique

(84) Designated Contracting States:
**DE FR GB**

(30) Priority: **19.03.1990  JP 69004/90**

(43) Date of publication of application:
**25.09.1991   Bulletin 1991/39**

(73) Proprietor: **HONDA GIKEN KOGYO KABUSHIKI KAISHA**
**Minato-ku, Tokyo (JP)**

(72) Inventor: **Ishida, Shinnosuke**
**4-1, 1-chome, Chuo, Wako-shi, Saitama (JP)**

(74) Representative:
**Prechtel, Jörg, Dipl.-Phys. Dr. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**81635 München (DE)**

(56) References cited:
**EP-A- 0 354 562**

- **PATENT ABSTRACTS OF JAPAN vol. 8, no. 245 (P-312)10 November 1984 &JP-A-59119417 (MITSUBISHI JUKOGYO) 10 JULY 1984**

**Description**

The present invention relates to an automatic travelling apparatus according to the preamble part of Claim 1.

Such an automatic travelling apparatus is known eg. from the EP-0 354 562 A2 or from EP-A-0 354 561.

Refering to the apparatus of the EP-0 354 562 A2, with the following description applying as well to the apparatus of the EP-A-0 354 561,

the apparatus comprises means for taking an image of an area ahead of a running vehicle by an image pick-up device comprising two video cameras attached to the vehicle. The image signals of these video cameras are stored alternately in buffer memories and shifted subsequently to an image processor, one after another, where they are subjected to image processing.

It is clear, that the images have to be sampled and digitized so that they can be stored in the buffer memories. With respect to the digitization binary digitization and poly-digitization are explicitly used.

On the basis of the binary-coded or digitized (sampled) image, the image processing is effected to determine the permissible travelling area. Accordingly, the permissible travelling area is determined with reference to the sampled digizized image points, in particular the permissible travelling area is represented by a number of image points being located directly beside one another, e.g. the image points located between the edges of a road being defined by a sequence of image points having continiuity.

Accordingly, the target course is defined with reference to the image points of the permissible travelling area, i.e. the target course is defined by a sequence of points in the permissible travelling area.

For effecting the steering of the vehicle, a target point is set to the target course at a specified distance ahead of the vehicle. Since the target course is defined by a sequence of points, only a point from this sequence can be selected as target point. Accordingly, the apparatus has to select that point as target point from the sequence of points defining the target course, which has the smallest distance from a fictitious target point corresponding exactly to the specified distance ahead of the vehicle. As the vehicle moves continuously, the fictitious target point moves simultaneously continuously along a target course while the target point being selected discontinuously jumps from one point to the next point of this sequence of points defining the target course. In those instances, when the fictitious target point does not correspond exactly to a point of the sequence of points defining the target course, the target point determined from the sequence of points has a decreased accuracy, thereby causing a decrease of accuracy of the steering control to follow the target course. In addition, due to the discontinuous jumping of the selected target point from one point to the next point of the sequence of points defining the target course, problems with respect to the stability of the steering control may arise.

From THE PATENTS ABSTRACTS OF JAPAN, vol. 8, no. 245 (P-312), November 10, 1984, referring to JP-A-59 119 417, an automatic travelling apparatus is known which is designed to follow a <u>fixed</u> course, defined by a plurality of coarsely preset discontinuous passing points, which render it unnecessary to lay a tape or an electric wire to define the fixed course. The coordinate data of the passing points are stored in a memory of the apparatus. Due to the definition of the fixed course by said passing points the memory of the apparatus does not need to have high capacity.

The course the vehicle should travel leading from one passing point to the next, accordingly being denoted here also as target course, is determined by the automatic travelling apparatus by interpolation between respective points. The interpolation is effected at minute pitches, i.e. also the target course between the passing points is defined by a discontinuous sequence of points and not by a continuous curve. There is no information how the interpolation is effected, in particular whether or not an approximate function is used. Possibly, linear interpolation is used, with the target course between subsequent passing points corresponding to straight (dotted) lines.

In view of the foregoing, it is an object of the present invention to provide an automatic travelling apparatus assuring higher accuracy and stability of the steering control, in order to permit the vehicle to follow the target course. This object is achieved by the automatic travelling apparatus having the features of claim 1.

According to the invention, the target course is converted from the sequence of points to a continuous curve by using an approximate function with the target point being set on said curve. As the vehicle moves, the target point set on said curve can move continuously and simultaneously with the vehicle and can always correspond exactly to the specified distance ahead of the vehicle. Accordingly, the fictitious target point mentioned above and the selected target point on said curve are identical, and the accuracy of the steering control is increased and the problems concerning the stability are eliminated.

Defining the target course by an approximate function corresponding to a continuous curve has the additional advantage, that storing the approximate function in the memory of the apparatus does not occupy very much memory space. E.g. if the approximate function comprises a polynomial , the approximate function is defined by (n+1) parameters, if the polynomial has the order of n. Therefore, for a target course corresponding to the polynomial only these (n+1) parameters have to be stored in the memory of the apparatus. Accordingly, the capacity of the memory of the apparatus is essentially determined by the requirements for image processing and not so much by the requirements for steering.

## BRIEF DESCRIPTION OF DRAWINGS

Fig. 1 is a block diagram showing a structure of an automatic travelling apparatus embodying the present invention.

Fig. 2 shows line segments of a road edges obtained by data processing of an image taken by a video camera.

Fig. 3 shows an image obtained by projective transformation of the image shown in Fig. 2.

Fig. 4 shows an example of a target course set in a permissible travelling area between detected road edges.

Figs. 5 (a) and 5 (b) show target courses to be set on a road, which a vehicle is to follow at a low speed (a) and a high speed (b) respectively.

Fig. 6 shows a relationship between a target course and a presumed course.

Fig. 7 shows a relationship between a vehicle's steering angle and its turning radius.

Fig. 8 shows a sequence of dots representing a target course.

Fig. 9 shows a target point being set on a target course indicated by a curve.

Fig. 10 shows a line segment in the X-Y coordinates.

Fig. 11 shows a point in the $\rho$-$\Theta$ point coordinates obtained by the Hough conversion of the line segment shown in Fig. 11.

Fig. 12 is a control flow chart according to the present invention.

In the drawings, 1 is an image pick-up device, 2 is an image processor, 3 is a means for determining a permissible travelling area, 4 is a means for setting a target course, 5 is a control means, 6 is a running speed sensor, 7 is a yaw rate sensor, 8 is a steering angle sensor, 9 a steering control, 10 a steering drive, 11 is a vehicle. RA is a permissible travelling area, OC is a target courses indicated by a sequence of points, OC' is a target course indicated by a curve, P is a position of a vehicle and O is a target point.

## DESCRIPTION OF THE PREFERRED EMBODIMENTS

Referring now to the drawings, a preferred embodiment of the present invention will be described in detail as follows:

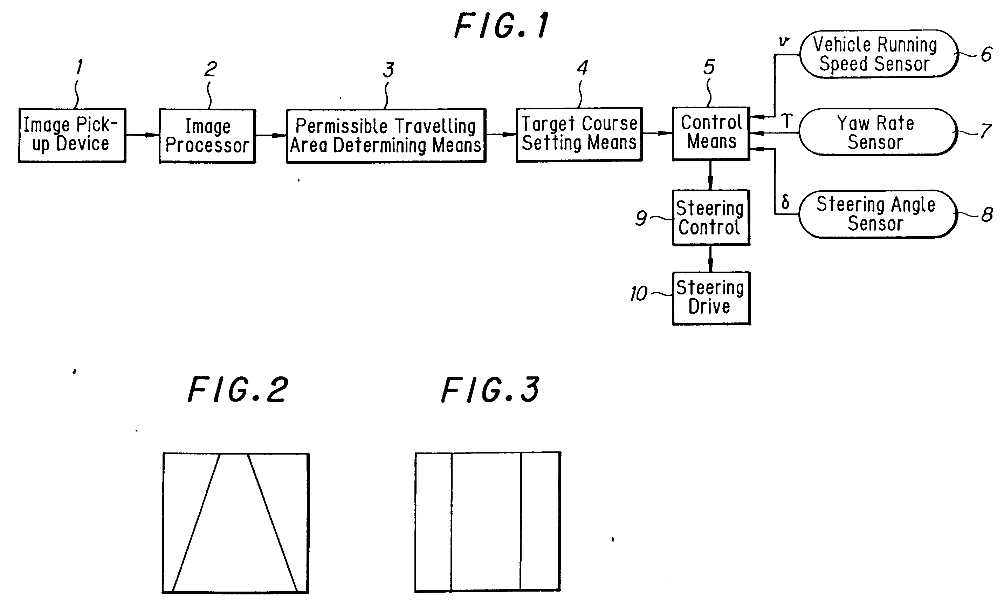

It will be observed from Fig. 1 that an automatic travelling apparatus according to the present invention comprises: an image pick-up device 1 such as a video camera attached to a vehicle for continuously picking up subsequent images of ground ahead of the vehicle; means 2 for sampling data from images taken by the image pick-up device 1 and processing data of the dot image to extract therefrom sequences of points spaced from each other such as road edges and the like; means 3 for determining, on the basis of the obtained sequences of points, a permissible travelling area such as a road in the direction in which the vehicle is to travel; means 4 for setting a target course in the permissible travelling area thus determined; means 5 for determining the instantaneous running condition of the vehicle on the basis of an output signal from a speed sensor 6 representing the vehicle's running speed "v", an output signal from a yaw rate sensor 7 representing the yaw rate "$\tau$" (a change of angular velocity in the yaw direction) and an output signal from a steering angle sensor 8 representing the steering angle "$\delta$", and for estimating, on the basis of the instantaneous running condition, a steering amount for permitting the vehicle to follow the target course; and means 9 (and a steering drive 10) for steering the vehicle with reference to the steering amount.

Actually, a microcomputer aided control is used in place of means 2, 3, 4 and 5, and means 9 can be included in the microcomputer aided control, if occasions demand.

The extraction of sequences of points such as road edges from the taken image in the image processing means 2 can be made as follows:

First, each image supplied from the image pick-up device 1 is sampled in form of dot image input signal which is subjected to differentiation process for detection of the road edges. Then, an automatic threshold setting circuit in the image processing means 2 sets an optimum threshold value in consideration of the degree of shade of the road edge image information just processed. The road edge image will be subjected to binary transformation.

Alternately, first, the image may be subjected to binary transformation, and then the binary data may be subjected to differentiation. In place of binary transformation poly-digitization may be performed to express some shade details of the image.

Digitized image information will be subjected to the Hough conversion to convert the X-Y linear coordinates into the corresponding $\rho$-$\theta$ point coordinates, thus jointing sequential points and eliminating isolated points to provide sequences of points representing the road edges as shown in Fig. 2.

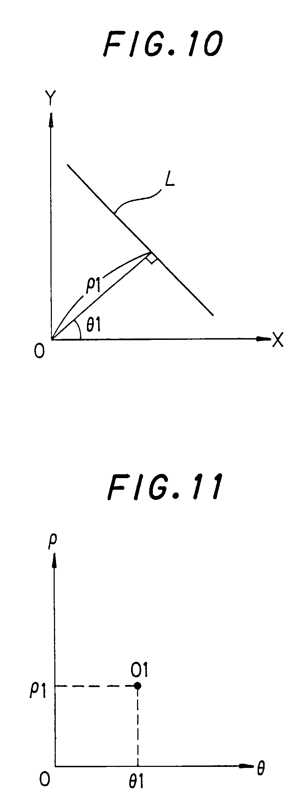

$\theta$ stands for an angle formed between the X-axis and a perpendicular from the origin of the X-Y coordinates to a line segment, whereas $\rho$ stands for the length of the normal line. For instance, the line segment L in the X-Y coordinates in Fig. 10 is expressed as the point 01 in the $\rho$-$\theta$ point coordinates in Fig. 11.

On that occasion, edge tracing may be performed on the basis of binary-coded image information to obtain road edges represented by sequences of points having continuity. The Hough conversion, edge tracing and other appropriate processings may be performed simultaneously, and then synthetic judgement may be made on the results of these processings to obtain a precise road edge information.

Since the image taken by a video camera of the image pick-up device 1 represents a perspective view, the permissible travelling area determining means 3 converts the perspective road edge image as shown in Fig. 2 into a non-perspective road edge image as shown in Fig. 3 according to the known projective conversion process.

The permissible travelling area determining means 3 has a projective conversion characteristics set in consideration of the perspective characteristics of associated video cameras.

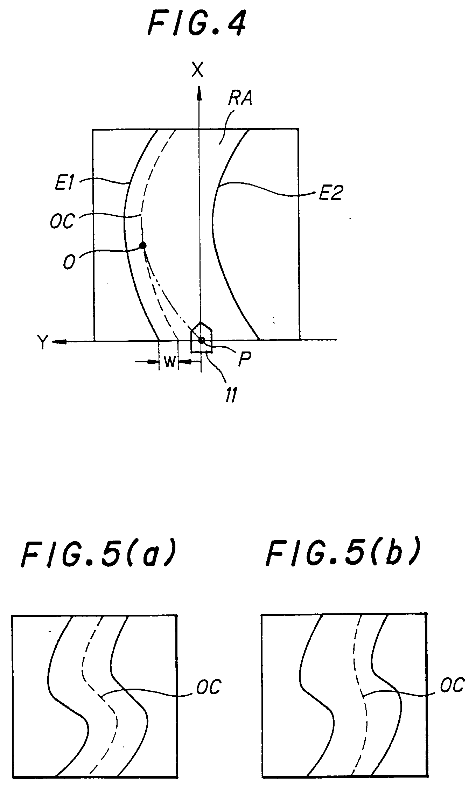

The permissible travelling area determining means 3 can determine, on the basis of the non-perspective road image obtained by projective conversion, for instance, an area between the continuous road edges E1 and E2 shown in Fig. 4 as a permissible travelling area RA in the X-Y coordinates wherein the X-axis corresponds to the direction in which the image is taken by the image pick-up device 1, i.e., the vehicle travels.

In Fig. 4, a instantaneous position of the vehicle 11 is indicated at a point "P", and the video camera of the image pick-up means 1 is mounted at a predetermined position on the vehicle whereat the point "P" may appear at the center lower point of the display screen as the origin of the X-Y coordinates.

After a permissible travelling area is determined by the permissible travelling area determining means 3, the target course setting means 4 will select a course most appropriate for running in the permissible travelling area, and will set the so selected course as a target course to follow.

Preferably, the course may be determined in consideration of the road contour and the running speed of the vehicle to meet the instantaneous travelling condition of the vehicle. However, the course may be basically determined in consideration of the width of the road as follows:

In case that the target course setting means 4 finds that the width of the road is above a predetermined extent, and that vehicles must keep to the left, a target course OC will be set a given constant distance "w" (for instance, 1.5 meters) apart from the left edge of the road, as shown in Fig. 4.

In case that the width of the road is below the predetermined extent, a target course will be set along the center line (not shown) of the road.

The coordinates of every sequential points representing the target course in the X-Y coordinate system are stored in an internal memory of the target course setting means 4.

The divisions of the X-Y coordinates for the permissible travelling area and the target course are selected in compliance with the magnification of the video camera of the image pick-up device 1.

In Fig. 4, the trace of the vehicle from "P" to "0" represents the course actually followed by the vehicle under the control of the control means 5 until the vehicle has come to the target course OC at the point 0.

According to the present invention, it is also possible to set the most desirable target course in consideration of the running condition of the vehicle as follows:

In case that the target course setting means 4 finds that the running speed measured by the speed sensor 6 is below a predetermined speed, the target course OC will be set in conformity with the road contour as seen from Fig. 4.

When the running speed of the vehicle is higher than a predetermined speed, and when the vehicle is running a curved road as shown in Fig. 5(b), a target course OC of reduced curvature is set so as to reduce the lateral force which is applied to the vehicle.

After setting a target course in the road, the control means 5 will estimate a steering amount to permit the vehicle to follow the target course as follows:

In the control means, a course which the vehicle will run along is presumed on the basis of the currently detected running condition, a deviation of the presumed running course from the target course is calculated, a correction value of steering angle for permitting the vehicle to follow the target course is determined, and then a target steering amount is estimated therefrom.

Practically, for example, a point where the vehicle will attain in the predetermined time at the currently detected running speed is presumed on the presumed course and the target point where the vehicle has to attain is set on the target course at the distance calculated by multiplying the presumed duration by the running speed, and then lateral deviation of the presumed point from the target point is measured to finally determine thereby a corresponding correction amount of steering angle.

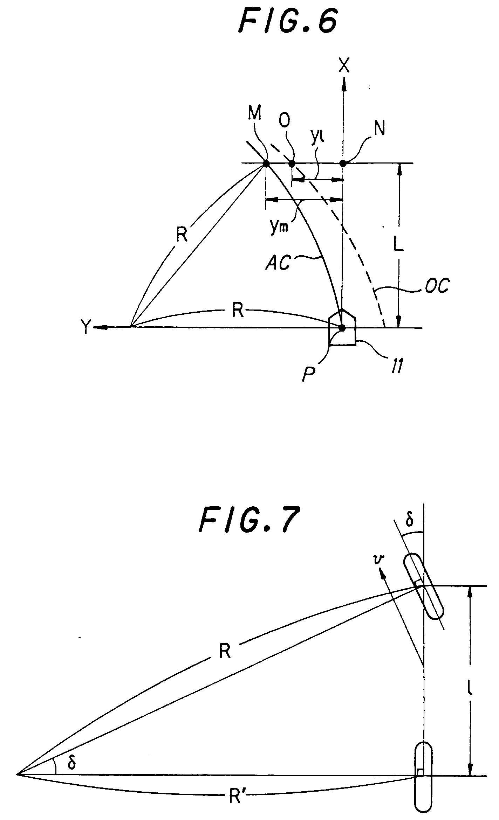

Referring now to Fig. 6, it is assumed that a vehicle 11 at Point "P" is to be brought to the target course OC.

First, the distance L (m) (L= v x T) on the X-axis which the vehicle 11 can run in T seconds will be determined on the basis of the vehicle's running speed v (m/s) which is detected by the speed sensor 6. Then, Point N is determined in the X-axis direction at the distance L apart from Point P (i.e. from the Y-axis) whereas a target point O is set on the target course OC at the same perpendicular distance from the Y-axis as point N has. The lateral deviation y $\ell$ from Point N to Point O (on which the vehicle would be in Tm seconds if it travelled straight along the X-axis) is estimated.

Second, in like manner, the course AC which the vehicle 11 is supposed to follow will be estimated from the yaw rate $\gamma$ (rad/sec), and point M on the presumed course AC at the same distance from the Y-axis as point N has. Then the lateral deviation y m from Point N to Point M (on which the vehicle would be in Tm seconds if it travelled straight along the X-axis) is estimated as follows:

Let a radius of the presumed course be represented by R:

$$y_m = R - \{R^2 - (v \times t_m)^2\}^{1/2}$$

$$= R - R\{1 - \{1 - (L/R)^2\}^{1/2}$$

When R >> L, we obtain

$$y_m = R - R\{1 - (L/R)^2/2\}$$

$$= L^2/2R \tag{1}$$

Since

$$\tau = v/R \tag{2}$$

From Equations (1) and (2)

$$y_m = L^2 \tau / 2v \tag{3}$$

The positive sign of yaw rate $\tau$ represents that the presumed course AC turns to the left whereas the negative sign indicates the presumed course turning to the right.

The yaw rate $\Delta\tau$ to which the yaw rate of the vehicle is to be corrected on the basis of the difference "e" between two deviations $y_\ell$ and $y_m$ will be determined from the following equation:

$$\Delta\tau = e \times 2v / L^2 \tag{4}$$

Then, on the basis of the steering angle $\delta$ detected at Point P by the steering angle sensor 8, the steering amount $\delta'$ for permitting the vehicle to get on the target course OC can be determined as follows:

Referring to Fig. 7, when R >> $\ell$, the following equation can be obtained:

$$\delta = \ell / R \tag{5}$$

From equations (2) and (5) we can derive

$$\delta = (\ell/v)\tau \tag{6}$$

where $\ell$ stands for a wheelbase. According to the equation (6) the steering angle $\Delta\delta$ for correction in accordance with the yaw rate $\Delta\tau$ to be corrected can be given by the following equation:

$$\Delta\delta = (\ell/v)\Delta\tau \tag{7}$$

In consideration of a general equation of steering angle in relation to the running speed, i.e., substituting $\ell=(1+Kv^2)$ into the equation (7), we can obtain

$$\Delta\delta = \Delta\tau\{\ell(1+Kv^2)/v\} \tag{8}$$

where "K" is a constant which is determined both from the the vehicle characteristics such as tyre characteristics, wheelbase and so on.

Therefore, a steering amount $\delta'$ for permitting the vehicle to get on the target course can be obtained by the following equation:

$$\delta' = \delta + \Delta\delta \tag{9}$$

In response to the steering amount $\delta'$ given from the control means 5 the steering control 9 issues a drive command to the steering drive 10 which in turn steers the vehicle toward the target course OC.

The above-mentioned processing operations will be repeated at an interval of a specified control cycle, thereby the steering control of the vehicle may be continuously performed to permit the vehicle to follow the target course OC successively resetable in the permissible travelling area which is successively renewable at every control cycle as the vehicle travels.

The automatic travelling apparatus according to the present invention further includes means for converting a sequence of spaced points representing a target course OC into a continuous curve whereon a target point O will be set.

The above-mentioned means is practically included in the control means 5, whereby a approximate functional curve is calculated from the dot data of a target course OC by the least square approximation.

It is well known that a sequence of points can also be approximated to a curve by other general methods such as the Fourier transformation, Lagrange's interpolation, Spline approximation and so on.

The calculation of functions of a curve being approximate to sequential dots of a target course by the least square method is described in detail as follows:

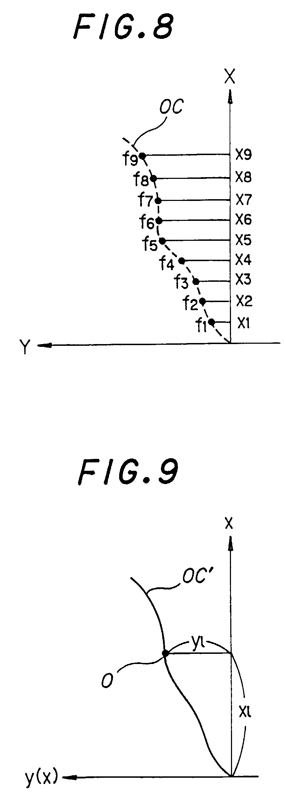

As shown in Fig. 8, a function $f = y(x)$ of the curve which is approximated by the least square method to the target course OC represented by a sequence of points in X-Y coordinates may be given by the following equation:

$$y(x) = a_m x^n + a_{m-1} x^{n-1} + ... + a_1 x + a_0 \tag{10}$$

In respect to all dot data $(x_1, f_1), (x_2, f_2) ... (x_n, f_n)$ of the target course OC the following supplementary matrix C is formed:

$$
C = \begin{vmatrix}
1 & X_1{}^2 & \cdots & X_n{}^\bullet \\
1 & X_2{}^2 & \cdots & X2{}^\bullet \\
\cdots & \cdots & \cdots & \\
1 & X_n{}^2 & \cdots & X_n{}^\bullet
\end{vmatrix} \tag{11}
$$

A coefficient matrix $A = C^t \cdot C$ is calculated. where $C^t$ is a transpose of C.

$$
A = \begin{vmatrix}
n & \Sigma\ Xi & \cdots \Sigma\ Xi^\bullet \\
\Sigma\ Xi & \Sigma\ Xi^2 & \cdots \Sigma\ Xi^{\bullet+1} \\
\cdots \cdots \cdots \\
\Sigma\ Xi^\bullet & \Sigma\ Xi^{\bullet+1} \cdots \Sigma\ Xi^{2\bullet}
\end{vmatrix} \tag{12}
$$

Then, a constant vector $b = C^t \cdot f$ is determined.

$$
b = \begin{vmatrix}
1 & 1 & \cdots & 1 \\
x_1 & x_2 & \cdots & x_n \\
x_1{}^1 & x_2{}^2 & \cdots & x_n{}^2 \\
\cdots \cdots \cdots \\
x_1{}^\bullet & x_2{}^\bullet & \cdots & x_n{}^\bullet
\end{vmatrix}
\cdot
\begin{vmatrix}
f_1 \\
f_2 \\
f_2 \\
\\
fn
\end{vmatrix}
=
\begin{vmatrix}
\Sigma\ fi \\
\Sigma\ xi\ fi \\
\Sigma\ xi^2\ fi \\
\\
\Sigma\ xi^\bullet\ fi
\end{vmatrix} \tag{13}
$$

Finally, linear equations of m+1 ( $A \cdot a = b$ ) are obtained and then coefficients aj (j=0, 1, 2,..., n) of the function y (x) indicated in the equation (10) are calculated thereby.

By applying thus obtained function y(x) the target point O can be set on the target course OC in the following way:

For example, as shown in Fig. 9, when $X\ell$ stands for a value of distance L determined by multiplying the running speed v by the predetermined duration tm, said value $X\ell$ substituted into the function y(x) to determine a value $y\ell$, by which the target point O is specified on the target course OC' represented by an approximated continuous curve.

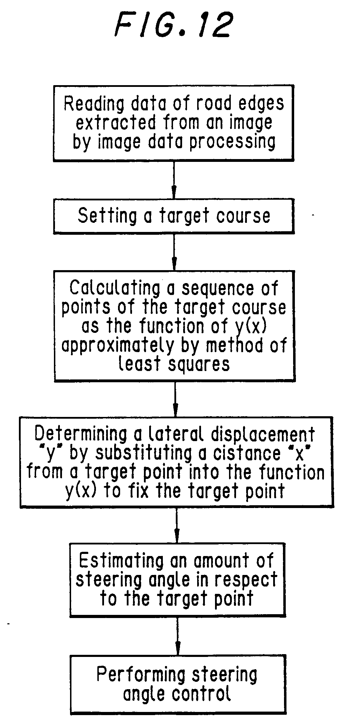

Fig. 12 shows a flow of control in the apparatus according to the present invention.

Namely, according to the present invention, it is possible to, in place of directly setting a target point O on a discontinuously dotted target course OC, locate the target point by use of a function y(x) representing the target course OC by a continuous curve, thereby assuring higher accuracy of target setting in respect to the target course.

As be apparent from the foregoing description, the automatic travelling apparatus according to the present invention offers such an advantage that when taking an image of ground area ahead of a running vehicle by an image pick-up device attached to said vehicle; determining a permissible travelling area in the X-Y coordinates having the X-axis corresponding to the vehicle's running direction on the basis of dot unit data sampled from the taken image; setting a target course by a sequence of points in the permissible travelling area; setting a target point on the target course at a specified distance in the running direction of the vehicle and steering the vehicle so as to bring it to the target point, it is particularly capable of converting the discontinuously dotted target course into a continuous curve and accurately setting thereon the target point, thereby assuring higher accuracy and stability of steering control for permitting the vehicle to follow the target course.

**Claims**

1. Automatic travelling apparatus comprising:

    means (1) for taking an image of an area ahead of a running vehicle (11) by an image pick-up device attached to the vehicle;
    means (2) for sampling data from the image taken by the image pick-up means;
    means (3) for determining, on the basis of the sampled image data, a permissible travelling area ahead of the vehicle (11) in X-Y coordinates, X-axis thereof corresponding to the vehicle's running direction;
    means (4) for setting a target course (OC) by a sequence of points in the permissible travelling area;
    means for setting a target point (O) on the target course at a specified distance (L) ahead of the vehicle (11) in the X-axis direction;
    control means (5, 9) for steering the vehicle to bring it to the target point,
    characterized by converting the target course (OC) from a sequence of points into a continuous curve (OC') by using an approximate function (Y(X)) and setting the target point (O) on said curve (OC').

2. Automatic travelling apparatus according to claim 1, characterized in that the approximate function (Y(X)) comprises a polynomial.

3. Automatic travelling apparatus according to claim 1 or 2, characterized in that the approximate function (Y(X)) is approximated to the sequence of points by use of least square approximation, Fourier transformation, Lagrange's interpolation, Spline approximation or the like.

**Patentansprüche**

1. Automatische Fahrvorrichtung, umfassend:

    Mittel (1) zur Aufnahme eines Bildes eines Bereiches vor einem fahrenden Fahrzeug (11) durch eine Bildaufnahmevorrichtung, die an dem Fahrzeug angebracht ist;
    Mittel (2) zum Abtasten von Daten aus dem durch das Bildaufnahmemittel aufgenommenen Bild;
    Mittel (3) zum Bestimmen - auf der Grundlage der abgetasteten Bildaten - eines zulässigen Fahrbereiches vor dem Fahrzeug (11) in X-Y-Koordinaten, deren X-Achse der Fahrrichtung des Fahrzeugs entspricht;
    Mittel (4) zum Festsetzen eines Zielkurses (OC) durch eine Folge von Punkten in dem zulässigen Fahrbereich;
    Mittel zum Festsetzen eines Zielpunktes (0) auf dem Zielkurs in einer spezifizierten Entfernung (L) vor dem Fahrzeug (11) in der X-Achsen-Richtung;
    Steuermittel (5, 9) zum Steuern des Fahrzeugs, um dieses zu dem Zielpunkt zu bringen,
    gekennzeichnet durch Umwandeln des Zielkurses (OC) aus einer Folge von Punkten in eine durchgehende Kurve (OC') unter Verwendung einer Näherungsfunktion (Y(X)) und durch Festsetzen des Zielpunktes (O) auf dieser Kurve (OC').

2. Automatische Fahrvorrichtung nach Anspruch 1,
    dadurch gekennzeichnet, daß die Näherungsfunktion (Y(X)) ein Polynom umfaßt.

3. Automatische Fahrvorrichtung nach Anspruch 1 oder 2,
    dadurch gekennzeichnet, daß die Näherungsfunktion (Y(X)) an die Folge von Punkten unter Verwendung einer kleinste-Quadrate-Näherung, Fourier-Transformation, Lagrange's-Interpolation, Spline-Näherung oder dergleichen angenähert wird.

**Revendications**

1. Appareil de déplacement automatique comprenant:

    des moyens (1) pour prendre une image d'une zone située à l'avant d'un véhicule en roulement (11) à l'aide d'un dispositif de prise de vues fixé sur le véhicule;
    des moyens (2) pour échantillonner des données de l'image prise par les moyens de prise de vues;
    des moyens (3) pour déterminer, sur la base des données d'image échantillonnées, une zone de déplacement admissible à l'avant du véhicule (11) dans un référentiel X-Y dont l'axe X correspond à la direction de roulement du véhicule;

des moyens (4) pour fixer une trajectoire cible (OC) par séquence de points dans la zone de déplacement admissible;

des moyens pour fixer un point cible (O) sur la trajectoire cible à une distance spécifiée (L) vers l'avant du véhicule (11) dans la direction de l'axe X;

des moyens de commande (5, 9) pour diriger le véhicule afin de le conduire vers le point cible;

caractérisé par le fait qu'on convertit la trajectoire cible (OC) à partir d'une séquence de points en une courbe continue (OC') en utilisant une fonction d'approximation (Y(X)) et en fixant le point cible (O) sur ladite courbe (OC').

2. Appareil de déplacement automatique selon la revendication 1, caractérisé en ce que la fonction d'approximation (Y(X)) comprend un polynôme.

3. Appareil de déplacement automatique selon la revendication 1 ou 2, caractérisé en ce que la fonction d'approximation (Y(X)) est approchée de la séquence de points par approximation, en utilisant une approximation par les moindres carrés, une transformation de Fourier, une interpolation de Lagrange, une approximation par des fonctions Spline, ou similaire.

# FIG.1

| 1 | 2 | 3 | 4 | 5 |
|---|---|---|---|---|
| Image Pick-up Device | Image Processor | Permissible Travelling Area Determining Means | Target Course Setting Means | Control Means |

*v* — Vehicle Running Speed Sensor — 6

T — Yaw Rate Sensor — 7

δ — Steering Angle Sensor — 8

9 — Steering Control

10 — Steering Drive

EP 0 448 060 B1

# FIG.2          # FIG.3

## FIG.4

## FIG.5(a)  FIG.5(b)

## FIG.6

## FIG.7

## FIG.8

## FIG.9

# FIG.10

# FIG.11

# FIG.12

Reading data of road edges
extracted from an image
by image data processing

Setting a target course

Calculating a sequence of
points of the target course
as the function of y(x)
approximately by method of
least squares

Determining a lateral displacement
"y" by substituting a cistance "x"
from a target point into the function
y(x) to fix the target point

Estimating an amount of
steering angle in respect
to the target point

Performing steering
angle control